# EUROPÄISCHE PATENTANMELDUNG

(11) **EP 1 743 929 A1**
(43) Veröffentlichungstag der Anmeldung: **17.01.2007**
(21) Anmeldenummer: 05015386.5
(22) Anmeldetag: 15.07.2005
(51) Int. Cl.: C09K 5/04

(54) **"Kältemittelmischung"**

(71) Anmelder: Solvay Fluor GmbH, 30173 Hannover (DE)
(72) Erfinder: Felix Flohr, 31134 Hildesheim (DE); Christoph Meurer, 30161 Hannover (DE); Martin Schwiegel, 30167 Hannover (DE)
(74) Vertreter: Kulik, Angelika

(57) **Zusammenfassung**

Die Erfindung betrifft ein Drop-in Substitut für R 22 in Kälteanlagen. Die erfindungsgemäße Kältemittelmischung enthält oder besteht aus 1,1,1,2-Tetrafluorethan (R134a), Pentafluorethan (R125) und Fluorethan (R161).

## Beschreibung

Die Erfindung betrifft eine Kältemittelmischung, die als Substitut für R 22 (Chlor-difluoro-methan) in einem Drop-in-Verfahren Verwendung findet.

Die Verwendung von fluorierten Kohlenwasserstoffen als zum Beispiel Kältemittel, Treibmittel, Lösemittel um nur einige der bekannten Anwendungsgebiete zu nennen, ist bekannt. Nach dem Feststellen des Ozonabbaus in der Stratosphäre durch die chlorierten Kohlenwasserstoffe wurden diese Substanzen durch chlorfreie Verbindungen ersetzt. Im Bereich der Kältetechnik sind inzwischen für alle Anwendungsbereiche Substanzen verfügbar, die die Ozonschicht nicht angreifen.

Speziell fluorierte Kohlenwasserstoffe weisen eine hohe Energieeffizienz auf, sind nicht brennbar und ungiftig verbunden mit der Eigenschaft, die Ozonschicht nicht anzugreifen.

Chlor-difluoro-methan (R 22) enthält Chlor und weist gegenüber Trichloro-fluoromethan (R 11) zwar ein geringeres Ozonabbaupotential auf, es gehört jedoch auch zu den Kältemitteln, die wegen ihrer schädigenden Wirkung nicht mehr verwendet werden dürfen. Ersatzstoffe für R 22 sind bereits bekannt und werden in Neuanlagen bereits eingesetzt.

Bekannte Ersatzkältemittel für den Bereich der Tieftemperaturkälte, im Temperaturbreich von etwa -20°C bis -40°C, sind R 507A und R 404A und für den Bereich der Normalkälte, im Temperaturbreich von etwa 0°C bis -20°C, R 134a. Im Bereich der Klimatechnik finden außerdem R 407C und R 410A Verwendung.

R 507A steht für eine Mischung aus Pentafluorethan und Trifluorethan, R 404A für eine Mischung aus Pentafluorethan, Trifluorethan und Tetrafluorethan. R 134a bedeutet 1,1,1,2 Tetrafluorethan und R 407C eine Mischung aus Difluormethan, Pentafluorethan und Tetrafluorethan. R 410C steht für eine Mischung aus Difluormethan und Pentafluorethan.

Man unterscheidet zwei Vorgehensweisen bei der Umrüstung der bestehenden Kälteanlagen auf Arbeitsfluide, die den strengeren Anforderungen des Umweltschutzes entsprechen.

Beim sogenannten Retrofitverfahren wird die gesamte Anlage entleert. Es wird somit die bestehende Anlage dem neuen Ersatzstoff angepaßt, beispielsweise durch Austausch des Öltyps zur Sicherstellung der Mischbarkeit von Ersatzstoff und Schmierstoff, Austausch von Dichtungsmaterialien zur Sicherstellung der Verträglichkeit mit dem Kältemittelersatzstoff und dem ausgetauschten ÖI sowie Wechsel des Filtertrockners, da der Wassergehalt der Austauschstoffe oftmals höher ist.

Bei dem sogenannten Drop-in Verfahren wird nur das Kältemittel ausgetauscht und das Öl verbleibt in der Anlage. Diese Verfahrensweise ist zwar im Umstellungsprozeß wirtschaftlicher, stellt jedoch höhere Anforderungen an die Auswahl der Ersatzstoffe. Zusätzlich ist die energetische Effizienz der Drop-in Ersatzstoffe häufig schlechter als die der Retrofit-Ersatzstoffe.

WO 02/26913 beschreibt eine Kältemittelzusammensetzung, die als R 22 Ersatz in einem Retrofit Verfahren einsetzbar ist. Als Kältemittel wird beispielsweise R 407C, eine Mischung aus Difluormethan, Pentafluorethan und Tetrafluorethan, und einem Kohlenwasserstoff als Lösevermittler offenbart.

WO 00/39242 beschreibt eine Kältemittelzusammensetzung, die 40 bis 60 Gew.-% Fluorethan und 10 bis 60 Gew.-% Trifluorojodomethan enthält und als Ersatz für R 22 oder R 502 eingesetzt werden kann. R 502 ist ein azeotropes Gemisch aus Chlor-difluoro-methan und Chlorpentafluoroethan.

US 5, 277, 834 kann man Kältemittelmischungen entnehmen, die ebenfalls als Ersatz für R 502 eingesetzt werden können. Als eine geeignete Zusammensetzung wird unter anderem eine Mischung aus 60 bis 90 Gew.-% Pentafluoroethan (R 125), 10 bis 15 Gew.-% Fluoroethan (R 161) und 3 bis 10 Gew.-% Tetrafluoroethan (R 134a) offenbart.

GB 2 298 866 offenbart eine Kältemittelmischung, die Fluorethan in einer nichtbrennbaren Menge enthält. Eine bevorzugte Kältemischung enthält außerdem Pentafluoroethan und Octafluoropropan. Für den Fall, dass diese Kältemittelmischung als Ersatz für R 22 verwendet wird, sollte die Kältemittelmischung R 125 in einer Menge von 1 bis 20 Gew.-% enthalten. In einer bevorzugten Ausführungsform wird diesen Mischungen ebenfalls noch ein Kohlenwasserstoff zugemischt, um die Löslichkeit der Kältemittel in den in den Kälteanlagen enthaltenen Mineralölen zu verbessern.

Als Öle bzw. Schmieröle werden in den bestehenden Kälteanlagen Mineralöle, Alkylbenzol-Öle, Weißöl oder Paraffinöle oder deren Mischungen verwendet. Für die Verwendung der speziellen Substitute mussten auf Grund ihrer unterschiedlichen Öllöslichkeiten neue Schmieröle in Erwägung gezogen werden. Demzufolge werden in Neuanlagen Esteröle eingesetzt. Wobei die Viskositätsklasse der Esteröle, der gleichen Viskositätsklasse der üblicherweise eingesetzten Mineralöle oder der Alkylbenzol-Öle entspricht.

Der Erfindung liegt die Aufgabe zu grunde, ein Kältemittel, insbesondere ein Kältemittelgemisch bereitzustellen, dass in einem Drop-in Verfahren als Substitut für R 22 für den Tieftemperaturbereich einsetzbar ist, ohne dass die in der Anlage vorhandenen Schmiermittel ausgetauscht werden müssen.

Die Aufgabe wurde durch eine Zusammensetzung aus Fluorethan (R 161), Tetrafluorethan (R 134a) und Pentafluorethan (R 125) gelöst. Diese Mischung ist als Ersatzstoff für R 22 in einem Drop-in Verfahren einsetzbar. Die in der Anlage vorhandenen Schmiermittel, beispielsweise Mineralöle oder Alkylbenzolöle können in der Anlage verbleiben und müssen nicht ausgetauscht werden.

Die Zusammensetzung der erfindungsgemäßen Mischung kann variieren, ohne dass die Anlageneffizienz negativ beeinflußt wird.

Es wurde gefunden, dass eine Mischung aus < 60 Gew.-%, vorzugsweise 40 - 55 Gew.-% Pentafluorethan (R 125), 5 bis 30 Gew.-%, vorzugsweise 10-30 Gew.-% Fluorethan (R 161), > 10 Gew.-%, vorzugsweise 20 - 50 Gew.-% 1,1,1,2-Tetrafluorethan (R 134a) als Ersatzstoff für R22 in einem Drop-in Verfahren eingesetzt werden kann.

In einer Ausführungsform der Erfindung wurde eine Mischung, die 50 Gew.-% R 125, 35 Gew.-% R 134a und 14 Gew.-% R 161 enthält oder daraus besteht als Drop-in Substitut für R 22 verwendet.

In einer anderen Ausführungsform wurde eine Mischung aus 50 Gew.-% Pentafluoroethan, 40 Gew.-% 1,1,1,2-Tetrafluorethan und 10 Gew.-% Fluorethan als Drop-in Substitut für R 22 verwendet.

Es wurde gefunden, dass die erfindungsgemäßen Mischungen auch in Anlagen zur Herstellung von Tieftemperaturkälte als Drop-in Substitut, für R 22 einsetzbar sind.

Fluorethan (R 161) kann aufgrund seiner Mischbarkeit mit Mineral- und Alkylbenzol-Ölen als Lösevermittler für und mit diesen Ölen, die in diesen Anlagen Verwendung finden, fungieren.

Es wurde weiterhin gefunden, dass der Anteil an Fluorethan (R 161) in der erfindungsgemäßen Mischungen erhöht werden kann, ohne dass ein, nach üblichen Kältemittelstandards brennbares Gemisch erhalten wird. Das hat zur Folge, dass die Löslichkeit zwischen Kältemittel und Öl erhöht wird, so dass auch in geometrisch schwierigen kalten Anlagenteilen ein sicherer Ölrücktransport gewährleistet ist.

Fluorethan hat mit einem GWP₁₀₀ von 12 ein relativ geringes Treibhauspotential. Somit ist es möglich, dass der GWP von Kältemittelmischungen durch die Zugabe von Fluorethan als Mischungskomponenten gesenkt werden kann.

Tabelle 1 zeigt die Treibhauspotentiale der erfindungsgemäßen Mischungen im Vergleich zu den Einzelsubstanzen.

**Tabelle 1: Treibhauspotential**

| Kältemittel | GWP Einzel-Komponenten | R22 | R422A | Mischung A | Mischung B | Mischung C | Mischung D | Mischung E |
|---|---|---|---|---|---|---|---|---|
| R22 | 1700 | 100.00% | | | | | | |
| R125 | 2800 | | 85.00% | 50.00% | 50.00% | 55.00% | 50.00% | 45.00% |
| R134a | 1300 | | 11.50% | 30.00% | 35.00% | 35.00% | 40.00% | 45.00% |
| R161 | 12 | | | 20.00% | 15.00% | 10.00% | 10.00% | 10.00% |
| R600a | 20 | | 3.50% | | | | | |
| | | | | | | | | |
| GWP Kältemittelmischungen | | 1700 | 2530.2 | 1792.4 | 1856.8 | 1996.2 | 1921.2 | 1996.2 |

**Tabelle 2: Vergleichende Leistungsdaten**

| Kältemittel | R22 | R422A | Mischung A | Mischung B | Mischung C | Mischung D | Mischung E |
|---|---|---|---|---|---|---|---|
| R22 | 100.00% | | | | | | |
| R125 | | 85.00% | 50.00% | 50.00% | | 50.00% | 45.00% |
| R134a | | 11.50% | 30.00% | 35.00% | 35.00% | 40.00% | 45.00% |
| R161 | | | 20.00% | 15.00% | 10.00% | 10.00% | 10.00% |
| R600a | | 3.50% | | | | | |
| COP | 2.50 | 1.96 | 1.68 | 2.20 | 2.14 | 2.16 | 2.17 |
| Qvol. [kJ/m³] | 1061 | 855 | 672 | 816 | 794 | 772 | 751 |

In Tabelle 2 sind Effizienz (COP) und volumetrische Kälteleistung (Qvol.) verschiedener Kältemittelmischungen für einen einfachen Kältekreislauf aufgeführt. Der Kreislauf wurde mit NIST Cycle-D für einen einfachen Kältekreislauf mit den Parametern Tₒ = -30°C, T_{c} = 40°C, T_{überh.} = 7K, T_{unterkühlt} = 1 K und einer Kompressoreffizienz gleich 1 berechnet.

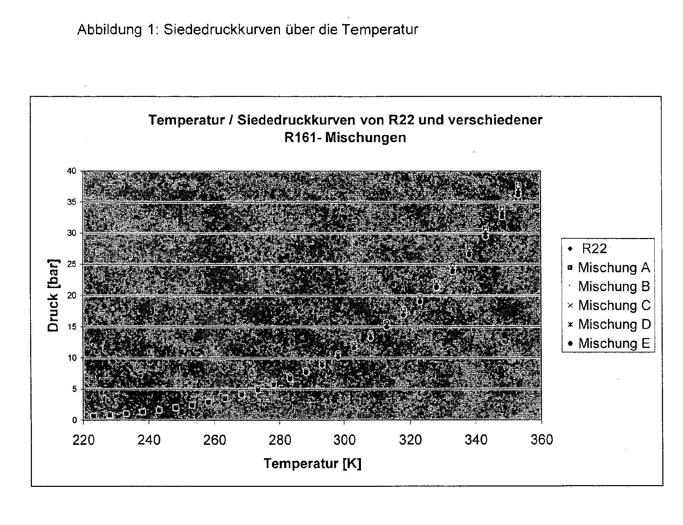

Die in den Tabellen 1 und 2 mit Mischung A - E bezeichneten erfindungsgemäßen Kältemittelmischungen zeigen ein ähnliches Druck- und Temperaturverhalten wie R 22. Somit ist es möglich, dass die erfindungsgemäßen Mischungen problemlos als Drop-in Substitut für R 22 einsetzbar sind. Wie aus der Abbildung 1 ersichtlich, zeigen die erfindungsgemäßen Mischungen Siededruckkurven analog der von R 22. Somit besteht keine Notwendigkeit irgendwelche Änderungen bezüglich der Druckfestigkeit bei den bestehenden Anlagen durch Austausch von Systemkomponenten vorzunehmen. Die erfindungsgemäßen Mischungen können daher ohne weiteres als Drop-in Substitut für R 22 eingesetzt werden.

## Patentansprüche

1. Kältemittelmischung als Drop-in Substitut für Chlor-difluoromethan (R22), enthaltend oder bestehend aus 1,1,1,2- Tetrafluorethan , Pentafluorethan und Fluorethan.

2. Kältemittelmischung nach Anspruch 1, **dadurch gekennzeichnet, dass** sie > 10 Gew.-% 1,1,1,2-Tetrafluorethan, < 60 Gew.-% Pentafluorethan und 5 bis 30 Gew.-% Fluorethan enthält oder daraus besteht.

3. Kältemittelmischung nach Anspruch 1 und 2, **dadurch gekennzeichnet, dass** sie 20 bis 50 Gew.-% 1,1,1,2- Tetrafluorethan, 40 bis 55 Gew.-% Pentafluorethan und 10 bis 30 Gew.-% Fluorethan enthält oder daraus besteht.

4. Verwendung einer Kältemittelmischung nach einem der Ansprüche 1 bis 3 als Drop-in Substitut für Chlor-difluoromethan in Kälteanlagen.

5. Verwendung einer Kältemittelmischung nach Anspruch 4 in Anlagen zur Erzeugung von Tieftemperaturkälte.
